# EUROPEAN PATENT APPLICATION

(11) **EP 4 650 300 A1**
(43) Date of publication of application: **19.11.2025**
(21) Application number: 24838250.9
(22) Date of filing: 15.01.2024
(51) Int. Cl.: B65G 1/04

(54) **TRACK SYSTEM, SHUTTLE VEHICLE SYSTEM, AND DISTRIBUTION SYSTEM**

(30) Priority: 12.07.2023 CN 202310854631
(71) Applicant: Beijing Jingdong Qianshi Technology Co., Ltd., Beijing 100176 (CN)
(72) Inventor: WANG, Guopeng, Beijing 100176 (CN); LIANG, Zhe, Beijing 100176 (CN)
(74) Representative: Page White Farrer
(86) International application number: PCT/CN2024/072358
(87) International publication number: WO 2025/010986

(57) **Abstract**

The present disclosure provides a track system, a shuttle car system, and a dispensing system. The track system comprises a descending track-switching mechanism. The descending track-switching mechanism comprises a descending track-switching segment disposed between a first longitudinal descending track segment and a second longitudinal descending track segment. The descending track-switching segment has its first end rotatably connected to the first longitudinal descending track segment, and its second end freely arranged. In the closed state, the second end of the descending track-switching segment engages with the second longitudinal descending track segment to connect the first longitudinal descending track segment with the second longitudinal descending track segment. In the open state, the second end of the descending track-switching segment is away from the second longitudinal descending track segment. During movement of the shuttle car from the transverse track to the second longitudinal descending track segment, the descending track-switching segment is configured to rotate under the push of the shuttle car to be switched from the closed state to the open state. There is no need to provide a dedicated driving mechanism for the opening and closing of the descending track-switching segment, thereby simplifying the structure of the track system.

## Description

### CROSS-REFERENCE TO RELATED APPLICATIONS

The present disclosure is based on a Chinese application with application number of 202310854631.9 filed on July 12, 2023, and claims its priority right, the disclosure of this Chinese application being hereby incorporated as an entirety.

### TECHNICAL FIELD

The present disclosure relates to a track system, a shuttle car system, and a dispensing system.

### BACKGROUND

A dispensing system for dispensing the sorted goods into shelves typically comprises a dispensing wall, a track system, and a shuttle car. The track system consists of horizontal tracks and vertical tracks. After carrying the goods to the target dispensing position on the target layer of the dispensing wall, the shuttle car releases the goods, which then slide down the inclined chute and drop into the storage bins on the shelves.

It should be noted here that the statements in this part of Background are provided only to present background technology related to the present disclosure, and do not necessarily constitute prior art.

### SUMMARY

The present disclosure provides a track system, a shuttle car system, and a dispensing system.

In a first aspect of the present disclosure, a track system is provided, comprising:
a transverse track extending in a first direction;
a longitudinal descending track disposed at a first end of the transverse track, the longitudinal descending track comprising a first longitudinal descending track segment and a second longitudinal descending track segment disposed at intervals in a second direction, the second direction being arranged to intersect with the first direction;
an arc-shaped transition segment connecting the first end of the transverse track and the second longitudinal descending track segment; and
a descending track-switching mechanism comprising a descending track-switching segment disposed between the first longitudinal descending track segment and the second longitudinal descending track segment, wherein the descending track-switching segment has its first end rotatably connected to the first longitudinal descending track segment and its second end disposed freely; the descending track-switching mechanism has a closed state, in which the second end of the descending track-switching segment engages with the second longitudinal descending track segment to connect the first longitudinal descending track segment with the second longitudinal descending track segment, and an open state, in which the second end of the descending track-switching segment is away from the second longitudinal descending track segment; and during movement of a shuttle car from the transverse track to the second longitudinal descending track segment via the arc-shaped transition segment, the descending track-switching segment is configured to rotate under the push of the shuttle car to be switched from the closed state to the open state.

In some embodiments, the track system further includes a longitudinal ascending track disposed at a second end of the transverse track, the longitudinal ascending track comprising a first longitudinal ascending track segment and a second longitudinal ascending track segment extending in the second direction and disposed at intervals, and the second longitudinal ascending track being connected to the second end of the transverse track; and wherein the track system further includes an ascending track-switching mechanism, which includes an ascending track-switching segment disposed between the first longitudinal ascending track segment and the second longitudinal ascending track segment, and a driving mechanism for driving the ascending track-switching segment to be opened and closed, the driving mechanism being configured to drive the ascending track-switching segment to be automatically opened and closed.

In some embodiments, the descending track-switching mechanism further includes a rotating shaft rotatably connected to the first longitudinal descending track segment, and a return assembly connected to the rotating shaft, wherein the first end of the descending track-switching segment is connected to the rotating shaft, and the return assembly is configured to apply a pulling force to the rotating shaft so that the descending track-switching segment returns to the closed state after disengaging from the shuttle car.

In some embodiments, the return assembly includes a swing rod and an elastic element, with a first end of the swing rod being connected to the rotating shaft, and a second end of the swing rod being connected to the elastic element.

In some embodiments, the elastic element includes a tension spring.

In some embodiments, the descending track-switching mechanism further includes a damper disposed close to the first end of the swing rod; and the process in which the swing rod is pulled by the return assembly to return the descending track-switching segment to the closed state includes a first stage, in which the swing rod is not in contact with the damper and a second stage, in which the swing rod comes into contact with the damper.

In some embodiments, the descending track-switching mechanism further includes a first buffer member disposed at the second end of the descending track-switching segment.

In some embodiments, the longitudinal descending track further includes a longitudinal guide plate extending in the second direction and disposed at outer sides of the first longitudinal descending track segment and the second longitudinal descending track segment; the longitudinal guide plate includes a first accommodating cavity bent outward and a second buffer member disposed in the first accommodating cavity; when the descending track-switching mechanism is in the open state, the second end of the descending track-switching segment is accommodated in the first accommodating cavity and comes into contact with the second buffer member.

In some embodiments, the descending track-switching segment includes a track-switching rack segment, and an arc-shaped guiding segment disposed at an inner side of the track-switching rack segment and close to the transverse track, wherein the track-switching rack segment is used to connect the first longitudinal descending track segment with the second longitudinal descending track segment in the closed state, and the arc-shaped guiding segment is used to guide the shuttle car in the open state.

In some embodiments, the arc-shaped transition segment includes a second accommodating cavity, and in the closed state, an end of the arc-shaped guiding segment is accommodated in the second accommodating cavity.

In a second aspect of the present disclosure, a shuttle car system is provided, which includes a shuttle car and the above-mentioned track system, wherein during movement of the shuttle car from the transverse track to the second longitudinal descending track segment via the arc-shaped transition segment, the descending track-switching segment is configured to rotate under the push of the shuttle car to be switched from the closed state to the open state.

In some embodiments, the shuttle car includes a car body and a driving wheel disposed on the car body, wherein the descending track-switching segment is configured to be opened under the push of the driving wheel.

In some embodiments, the driving wheel includes a driving gear meshing with racks of the track system and a rubber-coated wheel disposed at an inner side of the driving gear, the rubber-coated wheel being configured to push the descending track-switching segment.

In a third aspect of the present disclosure, a dispensing system is provided, which includes a dispensing wall body, a shuttle car, and the above-mentioned track system, wherein the track system is disposed on the dispensing wall body; and during movement of the shuttle car from the transverse track to the second longitudinal descending track segment via the arc-shaped transition segment, the descending track-switching segment is configured to rotate under the push of the shuttle car to be switched from the closed state to the open state.

Other features and advantages of the present disclosure will become clear through the following detailed description of exemplary embodiments of the present disclosure with reference to the attached drawings.

### BRIEF DESCRIPTION OF THE DRAWINGS

The accompanying drawings described herein are provided for further understanding of the present disclosure and constitute part of the present application. The illustrative embodiments of the present disclosure and their descriptions are used to explain the present disclosure and do not constitute undue limitations on the present disclosure. In the figures,
FIG. 1 is a schematic structural view of a dispensing system according to some embodiments of the present disclosure.
FIG. 2 is a view showing the running principle of a shuttle car according to some embodiments of the present disclosure.
FIG. 3 is a schematic structural view of the shuttle car according to some embodiments of the present disclosure.
FIG. 4 is a schematic structural view of the shuttle car when running on the track system according to some embodiments of the present disclosure.
FIG. 5 is a schematic structural view of a descending track-switching mechanism according to some embodiments of the present disclosure.
FIGS. 6 to 10 are schematic views showing the opening process of the descending track-switching segment under the push of the shuttle car according to some embodiments of the present disclosure.
FIG. 11 is an enlarged schematic structural view of the shuttle car when running on the transverse track according to some embodiments of the present disclosure.
FIG. 12 is an enlarged schematic structural view of the shuttle car when pushing open the descending track-switching segment according to some embodiments of the present disclosure.
FIG. 13 is a schematic structural view of the descending track-switching segment in a closed state according to some embodiments of the present disclosure.
FIG. 14 is a schematic structural view of the descending track-switching segment according to some embodiments of the present disclosure.
FIG. 15 is a schematic structural view of the descending track-switching segment in an open state according to some embodiments of the present disclosure.

### EMBODIMENTS

The technical solutions in the embodiments of the present disclosure will be described clearly and completely below in conjunction with the figures in the embodiments of the present disclosure. Obviously, the described embodiments are only a part of the embodiments of the present disclosure, rather than all the embodiments. The following explanation of at least one exemplary embodiment is actually only illustrative, and in no way serves as any limitation to the present disclosure, its application, or use. Based on the embodiments in the present disclosure, all other embodiments obtained by those skilled in the art without inventive effort shall fall within the protection scope of the present disclosure.

Unless otherwise specifically stated, the relative arrangements of components and steps, numerical expressions, and numerical values set forth in these embodiments do not limit the scope of the present disclosure. It should be understood that the dimensions of various parts shown in the drawings are not drawn to actual scale for the sake of convenience in description. Techniques, methods and equipment known to those skilled in the art in the related art may not be discussed in detail, but they should be regarded as part of the description under appropriate circumstances. In all examples shown and discussed herein, any specific values should be interpreted as illustrative only and not as a limitation. Therefore, other examples of exemplary embodiments may have different values. It should be noted that similar reference numerals and letters denote similar items in the following drawings. Thus, once an item is defined in one drawing, it does not need to be further discussed in subsequent drawings.

For convenience of description, spatially relative terms such as "on...", "above...", "on the upper surface of...", "upper" and the like may be used herein to describe the spatial positional relationship between one device or feature and other devices or features as shown in the figures. It should be understood that the spatially relative terms are intended to encompass different orientations of the device in use or operation in addition to the orientation depicted in the figures. For example, if the device in the drawings is turned over, the device described as "above other devices or configurations" or "on other devices or configurations" will then be positioned as "below other devices or configurations" or "underneath other devices or configurations". Thus, the exemplary term "above..." can encompass two kinds of orientations, i.e. "above..." and "below...". The device may also be positioned in other different ways, and the spatially relative descriptions used herein shall be interpreted accordingly.

As the dispensing wall has multiple target layers and the shuttle car needs to ascend or descend via vertical tracks to reach the target layer, a track-switching mechanism is provided between the horizontal tracks and vertical tracks to enable the shuttle car to selectively enter the horizontal track corresponding to the target layer. Thus, how to better design the running process of the track-switching mechanism is a problem to be solved.

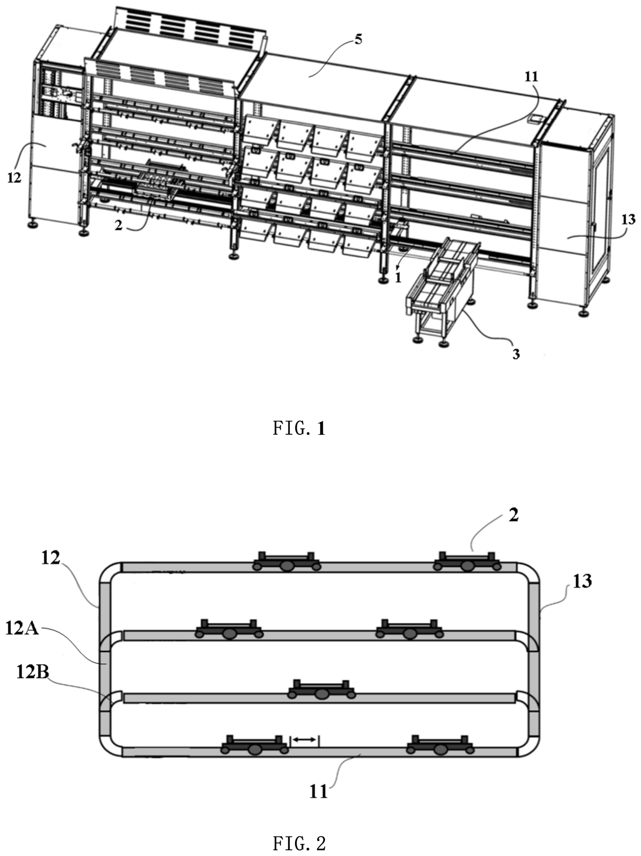

Referring to FIG. 1, in some embodiments, the dispensing system includes a supply platform 3, a dispensing wall body 5, a track system 1, and a shuttle car 2. The track system 1 includes a plurality of transverse tracks 11, as well as a longitudinal ascending track 12 and a longitudinal descending track 13 disposed at both ends of the plurality of transverse tracks 11 respectively.

As shown in FIG. 2, the longitudinal ascending track 12 includes a plurality of longitudinally ascending track segments 12A arranged at intervals, and ascending track-switching segments 12B disposed between two adjacent longitudinally ascending track segments 12A. The longitudinal descending track 13 includes a plurality of longitudinally descending track segments arranged at intervals, and descending track-switching segments disposed between two adjacent longitudinally descending track segments. The shuttle cars perform ascending actions on the ascending track segments 12A, and perform descending actions on the descending track segments.

In the related art, both the opening and closing of the track-switching segments are controlled by a driving mechanism. In the control on opening and closing of the track-switching segments by the driving mechanism, the opening and closing time of the track-switching segments needs to be accurately controlled according to the running trajectory of the shuttle car, so the control strategy is very complex. Moreover, each track-switching segment needs to be controlled by an independent set of driving mechanisms, which makes the structure of the dispensing wall more complicated and increases the cost.

FIG. 2 schematically shows that the track system 1 includes four transverse tracks 11. A plurality of the shuttle cars enter the track system from the right end of the transverse track on the bottommost layer, travel leftwards along the transverse track 11, and then ascend via the longitudinal ascending track segment 12A. After reaching the ascending track-switching segment 12B, the shuttle cars 2 may, according to the target dispensing position, continue to ascend along the ascending track-switching segment 12B or travel to another transverse track via the ascending track-switching segment 12B. At this time, the opening and closing state of the ascending track-switching segment 12B is determined by the target dispensing position of the shuttle car 2. After the shuttle car 2 completes dispensing at the target position, it needs to descend via the longitudinal descending track 13 to return to the starting point and continue to receive packages.

The inventors of the present application have found in their research that, all the shuttle cars having finished dispensing run from the transverse track 11 towards the longitudinal descending track 13. At this time, the descending track-switching segment corresponding to each layer of the transverse track **11** needs to be opened so that the shuttle cars can travel from the transverse track 11 to the longitudinal descending track 13. That is to say, in the process of the shuttle cars traveling from the transverse tracks 11 to the descending track 13 after having finished dispensing, all the descending track-switching segments are in an open state to make room for the shuttle cars to travel.

Based on the above findings, the inventor of the present application proposes to set the track-switching mechanism of the longitudinal descending track to be opened and closed passively. Specifically, the descending track-switching segments of the longitudinal descending track are set to be opened and closed passively under the push of the shuttle car, without the need for an active driving mechanism. This simplifies the structure of the track, reduces costs, and lowers the control difficulty of the track system.

The track system provided in the embodiments of the present application can be applied not only in dispensing systems but also in storage warehouses for storing and retrieving goods. The structure and working process of the track system will be described in detail below.

Referring to FIGS. 1, 4, and 5, some embodiments of the present disclosure provide a track system. The track system 1 in these embodiments includes transverse tracks 11 extending in a first direction, a longitudinal descending track 13, arc-shaped transition segments, and a descending track-switching mechanism. The longitudinal descending track 13 is disposed at first ends of the transverse tracks 11, and includes a first longitudinal descending track segment 131 and a second longitudinal descending track segment 132 spaced apart from each other in a second direction, with the first direction and the second direction intersecting with each other. The first end of the transverse track 11 is connected to the second longitudinal descending track segment 132 via the arc-shaped transition segment. The descending track-switching mechanism 4 includes a descending track-switching segment 41 disposed between the first longitudinal descending track segment 131 and the second longitudinal descending track segment 132. The descending track-switching segment 41 has its first end rotatably connected to the first longitudinal descending track segment 131, and its second end freely arranged. The descending track-switching mechanism 4 has a closed state, in which the second end of the descending track-switching segment 41 engages with the second longitudinal descending track segment 132 to connect the first longitudinal descending track segment 131 with the second longitudinal descending track segment 132, and an open state in which the second end of the descending track-switching segment 41 is away from the second longitudinal descending track segment 132. During movement of the shuttle car 2 from the transverse track 11 towards the second longitudinal descending track segment 132, the descending track-switching segment 41 is configured to rotate under the push of the shuttle car 2 to be switched from the closed state to the open state.

In the track system according to embodiments of the present disclosure, the descending track-switching segment 41 is pushed open by the shuttle car during its movement from the transverse track 11 to the second longitudinal descending track segment 132. That is to say, the descending track-switching segment 41 is passively pushed open by the shuttle car during travel of the shuttle car, rather than being actively opened by a driving mechanism. After being disengaged from the shuttle car 2, the descending track-switching segment 41 returns to the closed state. This makes it unnecessary to set up a dedicated driving mechanism for opening and closing the descending track-switching segment 41, thereby simplifying the structure of the dispensing system and reducing costs. Moreover, as the opening of the descending track-switching segment 41 is achieved by the push of the shuttle car, there is no need to set up a special control strategy for the opening, thus simplifying the control strategy of the track.

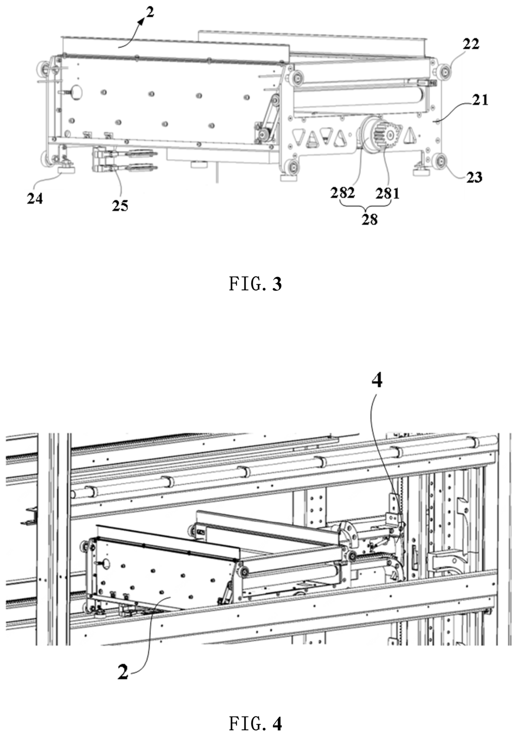

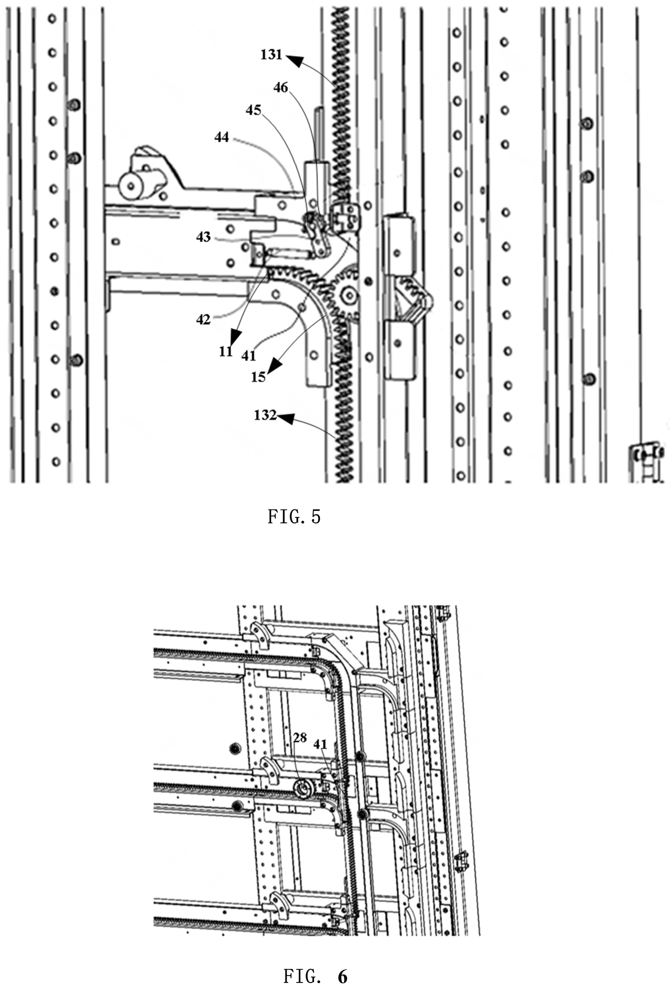

It should be noted here that FIGS. 4 and 5 schematically show that the transverse tracks 11 extend in a horizontal direction, and the first longitudinal descending track segment 131 and the second longitudinal descending track segment 132 extend in a vertical direction. That is to say, the extending directions of the transverse tracks 11 and the longitudinal tracks are perpendicular to each other. However, in some other embodiments not shown in the figures, the extending directions of the transverse tracks 11 and the longitudinal tracks may not be perpendicular. For example, the longitudinal track may be arranged obliquely.

As shown in FIG. 4, the transverse track 11 includes a transverse rack track and a transverse guide plate that are arranged opposite to each other at an interval. The gap between the transverse rack track and the transverse guide plate is used to clamp a driving wheel of the shuttle car. That is to say, the transverse track 11 is of a groove-type structure, where two side walls of the groove-type structure are the transverse rack track and the transverse guide plate respectively. When the shuttle car 2 is running on the transverse track 11, driving gears of the driving wheel of the shuttle car 2 mesh with racks on the transverse rack track.

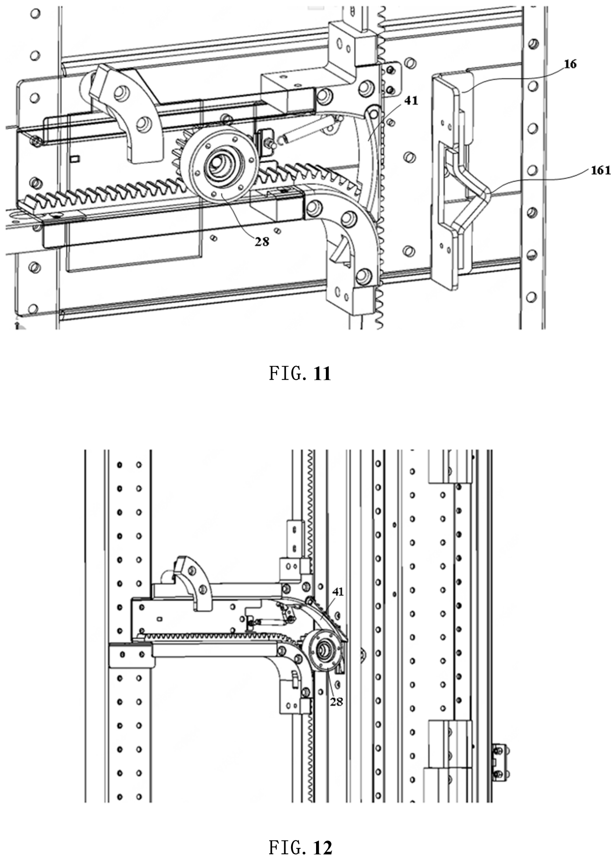

As shown in FIGS. 5 and 11, the longitudinal descending track 13 further includes a longitudinal guide plate 16 arranged at interval from the outer sides of the first longitudinal descending track segment 131 and the second longitudinal descending track segment 132. When the shuttle car travels from the transverse track 11 to the second longitudinal descending track segment 132, the driving wheel of the shuttle car is clamped between the longitudinal guide plate 16 and the second longitudinal descending track segment 132.

As shown in FIG. 5, the transverse track 11 is connected to the second longitudinal descending track segment 132 via the arc-shaped transition segment 15, such that the shuttle car smoothly moves from the transverse track 11 to the second longitudinal descending track segment 132 along the arc-shaped transition segment 15.

As shown in FIG. 5, during the descending process, the shuttle car 2 pushes open the descending track-switching segment 41, causing the descending track-switching mechanism 4 to be in the open state. After the shuttle car completely reaches the second longitudinal descending track segment 132, the descending track-switching segment 41 returns to the closed state. At this time, the descending track-switching segment 41 connects the first longitudinal descending track segment 131 with the second longitudinal descending track segment 132, so that other shuttle cars can also directly move from the first longitudinal descending track segment 131 to the second longitudinal descending track segment 132 via the descending track-switching segment 41.

In some embodiments, the track system 1 further includes a first longitudinal ascending track segment and a second longitudinal ascending track segment extending in the second direction and spaced apart from each other. The second longitudinal ascending track segment is connected to a second end of the transverse track 11. The track system 1 further includes an ascending track-switching mechanism, which includes an ascending track-switching segment disposed between the first longitudinal ascending track segment and the second longitudinal ascending track segment, and a driving mechanism for driving opening and closing of the ascending track-switching segment. The driving mechanism is configured to drive the automatic opening and closing of the ascending track-switching segment. Through analysis and research on the ascending and descending movements of the shuttle car, in the track system 1 according to embodiments of the present disclosure, the ascending track-switching segment is set to be opened and closed automatically, while the descending track-switching segment is set to be opened and closed passively under the push of the shuttle car. This not only ensures the control accuracy of the shuttle car on the ascending track through the automatic opening and closing of the ascending track-switching segment, but also simplifies the structure and control logic of the dispensing system through the passive opening and closing of the descending track-switching segment.

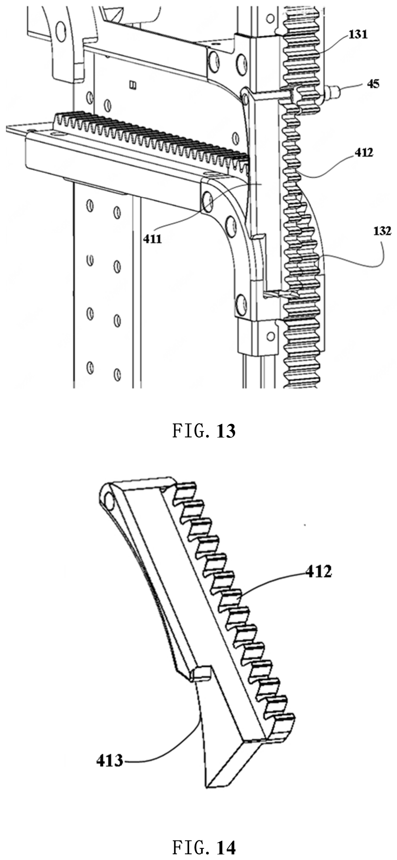

As shown in FIG. 13, the descending track-switching segment 41 includes a rack segment 412 that is spliced with the racks of the first longitudinal descending track segment 131 and the second longitudinal descending track segment 132, and a plate-like structure 411 disposed on one side of the rack segment 412 in a width direction. As shown in FIG. 14, an arc-shaped guiding segment 413 is provided on an inner side of the plate-like structure 411. Referring to FIG. 12, when the driving wheel 28 of the shuttle car passes through the crossing of the transverse track 11 and the second longitudinal descending track segment 132, the arc-shaped guiding segment 413 plays a guiding role.

The structure and working process of a dispensing system according to a specific embodiment of the present disclosure will be described in detail below with reference to FIGS. 1 to 15.

As shown in FIG. 1, the dispensing system in this embodiment includes a dispensing wall body 5, a shuttle car 2, and a track system 1. The track system 1 is disposed on the dispensing wall body 5. During movement of the shuttle car 2 from the transverse track 11 to the second longitudinal descending track segment 132 via the arc-shaped transition segment 15, the descending track-switching segment 41 is configured to rotate under the push of the shuttle car 2 to be switched from the closed state to the open state.

As shown in FIG. 3, the shuttle car 2 in some embodiments includes a car body 21, a driving wheel 28 disposed on the car body 21, an upper guide wheel 22, a lower guide wheel 23, an inner guide wheel 24, and a current collector 25, wherein the driving wheel 28 is used to drive the car body 21 to move, and the various guide wheels are used to guide the movement of the car body 21.

The driving wheel 28 includes a driving gear 281 and a rubber-coated wheel 282. Referring to FIG. 4, during running of the shuttle car 2, the driving gear 281 is configured to mesh with the rack of the track system, and the rubber-coated wheel 282 is used to engage with the supporting surface of the track system to support the car body 21.

In some embodiments, the shuttle car 2 includes a car body 21 and a driving wheel 28 disposed on the car body 21. The descending track-switching segment 41 is configured to be opened under the push of the driving wheel 28. In order to clearly show the process of interaction between the shuttle car 2 and the descending track-switching segment 41, only the driving wheel 28 interacting with the descending track-switching segment 41 is shown in each process diagram.

In order to reduce the noise generated when the driving wheel 28 pushes open the descending track-switching segment 41, in some embodiments, the driving wheel 28 includes a driving gear 281 that meshes with the rack of the track system, and a rubber-coated wheel 282 disposed on an inner side of the driving gear 281. The rubber-coated wheel 282 is configured to push the descending track-switching segment 41.

In some embodiments, the track system further includes a first buffer member disposed at the second end of the descending track-switching segment 41. For example, the first buffer member may be a buffer pad such as a rubber pad or the like fixedly arranged at the second end of the descending track-switching segment 41.

As shown in FIG. 11, the longitudinal descending track further includes a longitudinal guide plate 16 extending in the second direction and disposed at the outer side of the first longitudinal descending track segment 131 and the second longitudinal descending track segment 132. The longitudinal guide plate 16 includes a first accommodating cavity 161 bent outward and a second buffer member disposed inside the first accommodating cavity 161. When the descending track-switching mechanism is in the open state, the second end of the descending track-switching segment 41 is accommodated in the first accommodating cavity 161 and comes into contact with the second buffer member. The provision of the second buffer member can reduce noise.

In some embodiments, as shown in FIG. 5, the descending track-switching mechanism 4 further includes a rotating shaft 45 rotatably connected to the first longitudinal descending track segment 131, and a return assembly connected to the rotating shaft 45. The first end of the descending track-switching segment 41 is connected to the rotating shaft 45. The return assembly is configured to apply a pulling force to the rotating shaft 45 to return the descending track-switching segment 41 to the closed state. In this way, after the descending track-switching segment 41 is opened under the impact of the shuttle car, and then completely enters the descending segment to lead to disappear of the force applied to the descending track-switching segment 41, the return assembly pulls the descending track-switching segment 41 back to the closed state, thus enabling the descending track-switching segment 41 to return quickly.

Specifically, as shown in FIG. 5, the return assembly includes a swing rod 43 and an elastic element 42. A first end of the swing rod 43 is connected to the rotating shaft 45, and a second end of the swing rod 43 is connected to the elastic element 42. When the descending track-switching segment 41 is opened, it stretches the elastic element 42. Thus, after the thrust from the shuttle car on the descending track-switching segment 41 disappears, the pulling force of the elastic element 42 may act on the swing rod 43 and further on the rotating shaft 45, causing the descending track-switching segment 41 to quickly return to the closed state. It can be seen that neither the opening nor the closing of the descending track-switching segment 41 in the embodiment of the present disclosure requires a dedicated driving mechanism to be driven, thereby simplifying the structure of the track system.

In some embodiments, the elastic element 42 includes a tension spring.

In some embodiments, the descending track-switching mechanism further includes a damper 46 disposed close to the first end of the swing rod. The process of the swing rod 43 being pulled by the return assembly to return the descending track-switching segment 41 to the closed state includes a first stage, in which the swing rod 43 is not in contact with the damper 46, and a second stage, in which the swing rod 43 comes into contact with the damper 46.

As shown in FIG. 5, the connection point between the swing rod 43 and the rotating shaft 45 is close to an upper end of the swing rod 43. That is to say, there is a certain distance between the connection point of the swing rod 43 and the rotating shaft 45 and the upper end of the swing rod 43. In this way, when the swing rod 43 rotates under the pull of the return assembly, the upper end of the swing rod 43 also rotates about the rotating shaft 45. In the first stage when the swing rod 43 starts to rotate, the swing rod 43 is not in contact with the damper 46, so the swing rod 43 rotates at a relatively fast speed in the first stage of initial rotation; in the second stage when the swing rod 43 is about to finish rotating, the swing rod 43 comes into contact with the damper 46 to reduce the recoil force.

The damper 46 is disposed on the dispensing wall body 5 and at an outer side of the upper end of the swing rod 43. When the swing rod 43 rotates under the pull of the return assembly, the upper end of the swing rod 43 rotates outward for a certain period of time and then comes into contact with the damper 46.

As shown in FIG. 14, in some embodiments, the descending track-switching segment 41 includes an arc-shaped guiding segment 413 disposed close to a side of the transverse track 11. Referring to FIGS.11 and 12, during the movement of the shuttle car from the transverse track 11 to the second longitudinal descending track segment 132, the arc-shaped guiding segment 413 plays a guiding role in the running of the shuttle car.

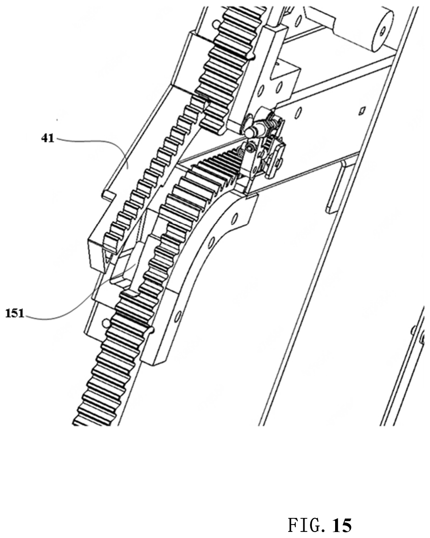

As shown in FIG. 15, in some embodiments, the arc-shaped transition segment 15 includes a second accommodating cavity 151. In the closed state, the end of the arc-shaped guiding segment 413 is accommodated in the second accommodating cavity 151. With the arc-shaped guiding segment 413 being disposed in the second accommodating cavity 151 in the closed state, the rack on the descending track-switching segment 41 is spliced with the rack on the second longitudinal descending track segment 132 for the shuttle car to descend.

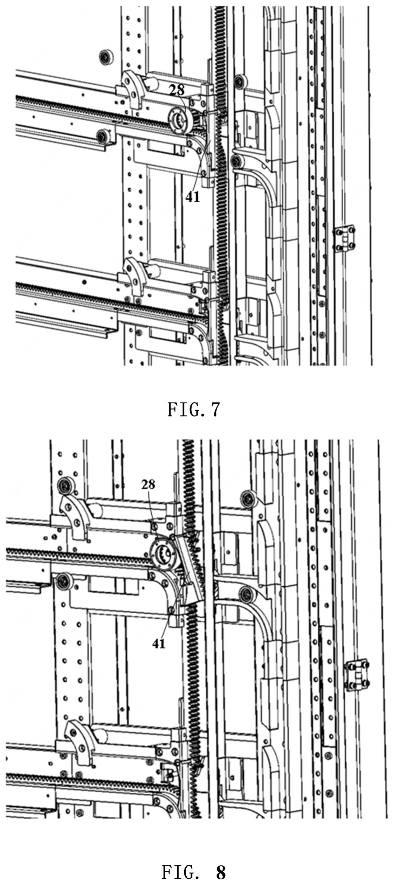

As shown in FIG. 7, while the shuttle car is traveling on the transverse track without contacting the descending track-switching segment 41, the descending track-switching segment 41 is in the closed state. At this time, the descending track-switching segment 41 is connected with the first longitudinal descending track segment 131 and the second longitudinal descending track segment 132 to form a closed descending track, allowing other shuttle cars to perform continuous descending actions through such closed descending track. As shown in FIGS. 7 to 9, in the process of the shuttle car gradually moving from the transverse track towards the second longitudinal descending track segment 132, when the shuttle car moves to the crossing between the transverse track and the second longitudinal descending track segment 132, its driving wheel 28 collides with the descending track-switching segment 41 and pushes the descending track-switching segment 41 to rotate to be opened, such that the shuttle car moves through the gap formed by the opening of the descending track-switching segment 41 onto the second longitudinal descending track segment 132.

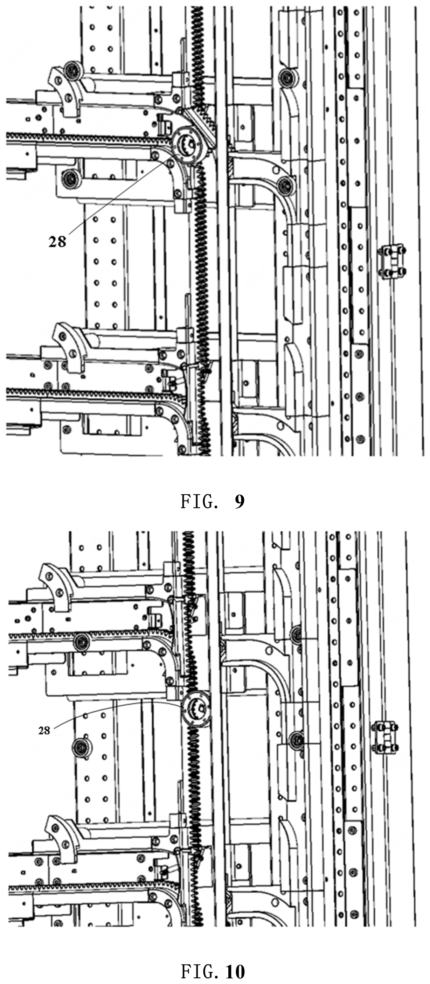

As shown in FIG. 10, after the shuttle car has completely moved onto the second longitudinal descending track segment 132, the descending track-switching segment 41 loses the thrust from the shuttle car and returns to the closed state under the action of the tension spring. The shuttle car continues to descend along the second longitudinal descending track segment 132.

Finally, it should be noted that the above embodiments are only used to illustrate the technical solutions of the present disclosure and not to limit them; although the present disclosure has been described in detail with reference to the preferred embodiments, those of ordinary skill in the art should understand that modifications can still be made to the specific implementations of the present disclosure or equivalent substitutions can be made to some technical features; without departing from the spirit of the technical solutions of the present disclosure, all of which should be covered within the scope of the technical solutions claimed by the present disclosure.

## Claims

1. A track system, comprising:
a transverse track (11) extending in a first direction;
a longitudinal descending track (13) disposed at a first end of the transverse track (11), the longitudinal descending track (13) comprising a first longitudinal descending track segment (131) and a second longitudinal descending track segment (132) disposed at intervals in a second direction, the second direction being arranged to intersect with the first direction;
an arc-shaped transition segment (15) connecting the first end of the transverse track (11) with the second longitudinal descending track segment (132); and
a descending track-switching mechanism (4) comprising a descending track-switching segment (41) disposed between the first longitudinal descending track segment (131) and the second longitudinal descending track segment (132), wherein the descending track-switching segment (41) has its first end rotatably connected to the first longitudinal descending track segment (131) and its second end freely disposed; the descending track-switching mechanism (4) has a closed state, in which the second end of the descending track-switching segment (41) engages with the second longitudinal descending track segment (132) to connect the first longitudinal descending track segment (131) with the second longitudinal descending track segment (132), and an open state, in which the second end of the descending track-switching segment (41) is away from the second longitudinal descending track segment (132); and during movement of a shuttle car (2) from the transverse track (11) to the second longitudinal descending track segment (132) via the arc-shaped transition segment (15), the descending track-switching segment (41) is configured to rotate under the push of the shuttle car (2) to be switched from the closed state to the open state.

2. The track system according to claim 1, wherein the track system (1) further comprises a longitudinal ascending track (12) disposed at a second end of the transverse track (11), the longitudinal ascending track (12) comprising a first longitudinal ascending track segment and a second longitudinal ascending track segment extending in the second direction and disposed at intervals, and the second longitudinal ascending track being connected to the second end of the transverse track (11); and wherein the track system further comprises an ascending track-switching mechanism, which comprises an ascending track-switching segment disposed between the first longitudinal ascending track segment and the second longitudinal ascending track segment, and a driving mechanism for driving the ascending track-switching segment to be opened and closed, the driving mechanism being configured to drive the ascending track-switching segment to be automatically opened and closed.

3. The track system according to claim 1 or 2, wherein the descending track-switching mechanism (4) further comprises a rotating shaft (45) rotatably connected to the first longitudinal descending track segment (131), and a return assembly connected to the rotating shaft (45), wherein the first end of the descending track-switching segment (41) is connected to the rotating shaft (45), and the return assembly is configured to apply a pulling force to the rotating shaft (45) so that the descending track-switching segment (41) returns to the closed state after disengaging from the shuttle car (2).

4. The track system according to claim 3, wherein the return assembly comprises a swing rod (43) and an elastic element (42), with a first end of the swing rod (43) being connected to the rotating shaft (45), and a second end of the swing rod (43) being connected to the elastic element (42).

5. The track system according to claim 4, wherein the elastic element (42) comprises a tension spring.

6. The track system according to claim 4 or 5, wherein the descending track-switching mechanism further comprises a damper (46) disposed close to the first end of the swing rod (43); and the process in which the swing rod (43) is pulled by the return assembly to return the descending track-switching segment (41) to the closed state comprises a first stage, in which the swing rod (43) is not in contact with the damper (46) and a second stage, in which the swing rod (43) comes into contact with the damper (46).

7. The track system according to any one of claims 1 to 6, wherein the descending track-switching mechanism further includes a first buffer member disposed at the second end of the descending track-switching segment (41).

8. The track system according to any one of claims 1 to 7, wherein the longitudinal descending track further comprises a longitudinal guide plate extending in the second direction and disposed at outer sides of the first longitudinal descending track segment (131) and the second longitudinal descending track segment (132); the longitudinal guide plate comprises a first accommodating cavity bent outward and a second buffer member disposed in the first accommodating cavity; when the descending track-switching mechanism is in the open state, the second end of the descending track-switching segment (41) is accommodated in the first accommodating cavity and comes into contact with the second buffer member.

9. The track system according to any one of claims 1 to 8, wherein the descending track-switching segment (41) comprises a track-switching rack segment (412), and an arc-shaped guiding segment (413) disposed at an inner side of the track-switching rack segment (412) and close to the transverse track (11), wherein the track-switching rack segment (412) is used to connect the first longitudinal descending track segment (131) with the second longitudinal descending track segment (132) in the closed state, and the arc-shaped guiding segment (413) is used to guide the shuttle car in the open state.

10. The track system according to claim 9, wherein the arc-shaped transition segment comprises a second accommodating cavity (151), and in the closed state, an end of the arc-shaped guiding segment (413) is accommodated in the second accommodating cavity.

11. A shuttle car system, comprising a shuttle car (2) and the track system according to any one of claims 1 to 10, wherein during movement of the shuttle car (2) from the transverse track (11) to the second longitudinal descending track segment (132) via the arc-shaped transition segment (15), the descending track-switching segment (41) is configured to rotate under the push of the shuttle car (2) to be switched from the closed state to the open state.

12. The shuttle car system according to claim 11, wherein the shuttle car (2) comprises a car body (21) and a driving wheel (28) disposed on the car body (21), wherein the descending track-switching segment (41) is configured to be opened under the push of the driving wheel (28).

13. The shuttle car system according to claim 12, wherein the driving wheel (28) comprises a driving gear (281) meshing with racks of the track system and a rubber-coated wheel (282) disposed at an inner side of the driving gear (281), the rubber-coated wheel (282) being configured to push the descending track-switching segment (41).

14. A dispensing system, comprising a dispensing wall body (5), a shuttle car (2), and the track system according to any one of claims 1 to 10, wherein the track system is disposed on the dispensing wall body (5); and during movement of the shuttle car (2) from the transverse track (11) to the second longitudinal descending track segment (132) via the arc-shaped transition segment (15), the descending track-switching segment (41) is configured to rotate under the push of the shuttle car (2) to be switched from the closed state to the open state.
